(19) Europäisches Patentamt

European Patent Office

Office européen des brevets

(11) **EP 1 475 471 B1**

## (12) EUROPÄISCHE PATENTSCHRIFT

(45) Veröffentlichungstag und Bekanntmachung des Hinweises auf die Patenterteilung:
**27.09.2006 Patentblatt 2006/39**

(51) Int Cl.:
*D06F 39/00* (2006.01) *A47L 15/46* (2006.01)
*G01N 21/53* (2006.01)

(21) Anmeldenummer: **04015976.6**

(22) Anmeldetag: **14.02.2002**

(54) **Trübungssensor mit angepasster Übertragungscharakteristik und Verfahren zur Herstellung desselben**

Turbidity sensor with adapted transmission characteristics and manufacturing method therefor

Capteur de turbidité avec caractéristiques de transmission adaptées et procédé pour fabriquer celui-ci

(84) Benannte Vertragsstaaten:
**DE IT**

(43) Veröffentlichungstag der Anmeldung:
**10.11.2004 Patentblatt 2004/46**

(62) Dokumentnummer(n) der früheren Anmeldung(en) nach Art. 76 EPÜ:
**02003147.2 / 1 338 693**

(73) Patentinhaber: **emz-Hanauer GmbH & Co. KGaA**
**92507 Nabburg (DE)**

(72) Erfinder: **Schenkl, Johann**
**92439 Bodenwöhr (DE)**

(74) Vertreter: **Schmidt, Steffen J.**
**Wuesthoff & Wuesthoff,**
**Patent- und Rechtsanwälte,**
**Schweigerstrasse 2**
**81541 München (DE)**

(56) Entgegenhaltungen:
**US-A- 3 449 578 US-A- 4 257 708**

**Beschreibung**

**Gebiet der Erfindung**

Die vorliegende Erfindung betrifft im Allgemeinen Trübungssensoren für Haushaltsgeräte, wie z.B. Spülmaschinen, Waschmaschinen und Trockner. Insbesondere betrifft die vorliegende Erfindung Trübungssensoren, bei denen die Übertragungscharakteristika einzelner Komponenten, wie z.B. eines Senders und eines Empfängers für optische Strahlung, aufeinander abgestimmt sind bzw. werden.

**Hintergrund der Erfindung**

Bei Haushaltsgeräten, wie z.B. Waschmaschinen, Spülmaschinen und Trocknern ist es bekannt, Trübungssensoren zu verwenden, um die Trübung oder Verunreinigung von in solchen Haushaltsgeräten verwendeten Medien, wie z.B. Spül- oder Waschwasser bzw. Trocknerluft zu bestimmen. Aus der Trübung oder Verunreinigung von Reinigungswasser kann dann beispielsweise die Verschmutzung des zu reinigenden Gutes oder über Inhaltsstoffe der Trocknerabluft oder Zustand des Trocknerflusensiebs die noch in einem zu trocknenden Gut vorhandene Feuchtigkeit ermittelt werden.

Trübungssensoren bestehen im Allgemeinen aus einem Sender und einem Empfänger für optische Strahlung, die sich durch das verwendete Medium ausbreitet. Wechselwirkungen der Strahlung auf ihrem Ausbreitungsweg durch das Medium werden verwendet, um auf die Trübung oder Verunreinigung des Mediums zu schließen.

Die Trübungssensoren weisen ein Gehäuse auf, das in einem Haushaltsgerät so angeordnet ist, dass sich zumindest die Bereiche des Gehäuses, die den Sender und Empfänger aufweisen, in das Innere des Gerätes erstrecken, um die Strahlung durch das sich beim Betrieb des Gerätes in dessen Innerem befindliche Medium zu richten.

Die Übertragungscharakteristik solcher Trübungssensoren ist für deren Betrieb wesentlich, da sie die Genauigkeit und Zuverlässigkeit einer Trübungs- oder Verunreinigungserfassung bestimmt. Für eine unbedämpfte Übertragungsstrecke zwischen einem Sender und einem Empfänger eines Trübungssensors ergibt sich der von dem Empfänger erzeugte Empfängerstrom aus einer Multiplikation des zur Erzeugung der Strahlung dem Sender zugeführten Stroms mit einer Konstante, die neben den im Folgenden genannten Größen auch von den Bereichen des Sensorgehäuses und dem Medium beeinflusst wird, durch die sich der Messstrahl ausbreitet.

Die Konstante hängt senderseitig vom Wirkungsgrad des Senders ab, beispielsweise dem Wirkungsgrad einer Senderdiode für optische Strahlung bzw. der Güte eines damit verwendeten Senderchips. Entsprechend wird die Konstante empfängerseitig vom Wirkungsgrad des Empfängers beeinflußt, beispielsweise von der Güte eines verwendeten Empfängerchips.

Um die Übertragungscharakteristik von Trübungssensoren zu optimieren, d.h. für eine vorgegebene Spannung oder einen vorgegebenen Strom zum Betrieb des Senders empfängerseitig eine möglichst hohe Ausgangsspannung oder einen möglichst hohen Ausgangsstrom zu erhalten, werden üblicherweise selektierte Bauelemente zum Aufbau des Senders und Empfängers verwendet. Hierfür ist es bekannt, Sender und Empfänger bzw. deren Komponenten vor einem Aufbau eines Trübungssensors hinsichtlich ihrer Sende- bzw. Empfangscharakteristika zu vermessen und dann entsprechend zu gruppieren, d.h. zueinander passende Sender und Empfänger paarweise in den Trübungssensoren zu verwenden. Diese Vorgehensweise ist aufgrund der erforderlichen Überprüfung der Sender und Empfänger zeitaufwendig und kostenintensiv und führt dazu, dass im Allgemeinen nur bestimmte Gruppen von Sender- und Empfängerpaaren verwendet werden können. Alternativ ist es bekannt, den Sender eines Trübungssensors mit einer über einen großen Bereich einstellbaren Leistung zu versorgen, um ausgangsseitig Signale gewünschter oder erforderlicher Größe und Qualität zu erhalten. Dies erfordert eine senderseitige Leistungseinstellung beim Aufbau eines Trübungssensors in Abhängigkeit ausgangsseitiger Signale. Zur Leistungseinstellung benötigte Komponenten sind in dem Trübungssensor angeordnet, werden aber lediglich beim Aufbau des Trübungssensors, aber nicht bei dessen Betrieb benötigt. Dieser Ansatz hat neben der erforderlichen Leistungsanpassung bei der Leistungsversorgung des Senders den Nachteil, dass solche Trübungssensoren Komponenten aufweisen, die für deren eigentlichen Betrieb nicht erforderlich sind. Alternativ werden für eine solche Leistungseinstellung benötigte Komponenten in einer zur Steuerung des Sensors verwendeten Einrichtungen angeordnet. In beiden Fällen wird der Sensor im Allgemeinen nur an einem Arbeitspunkt betrieben, weshalb die zur Leistungseinstellung verwendeten Komponenten beim eigentlichen Betrieb nicht benötigt werden.

Derartige Maßnahmen werden in zunehmendem Maße erforderlich, da die bei Trübungssensoren verwendeten Komponenten, insbesondere Sender und Empfänger, mit immer höheren Wirkungsgraden bzw. Empfindlichkeiten (Güte) gefertigt werden. Dies macht es wiederum in zunehmenden Maß schwieriger, Sender-Empfänger-Paarungen zu erreichen, die für einen Betrieb eines Haushaltsgeräts vorgegebene Kennwerte aufweisen. Mit anderen Worten, die einzelnen Komponenten zum Aufbau eines Trübungssensors werden immer besser, weshalb Trübungssensoren schlechtere Messcharakteristika aufweisen, wenn die zum Aufbau ausgewählten Sender-Empfänger-Paarungen nicht optimal aufeinander abgestimmt sind.

EP 0 178 031 A1 offenbart einen Trübungssensor für Haushaltsgeräte mit zwei Sendern und einem Empfänger.

## Aufgabe der Erfindung

Aufgabe der vorliegenden Erfindung ist es im Allgemeinen die oben genannten Probleme des Standes der Technik zu beseitigen. Insbesondere soll die vorliegende Erfindung ein Verfahren zur Herstellung von Trübungssensoren bereitstellen, das es ermöglicht, einerseits bei Verwendung sehr hochwertiger Sender und Empfänger deren höhere Absolutwerte auf einfache Weise zu kompensieren und andererseits den Einsatz ungenauerer oder schlecht aufeinander abgestimmt ausgewählte ("unpassende") Sender und Empfänger zu ermöglichen. Des weiteren soll die vorliegende Erfindung Trübungssensoren mit Übertragungscharakteristika bereitstellen, die die Streuung hochwertiger Sender und Empfänger kompensieren bzw. die aus einer Kombination ungenauer Sender und ungenauer Empfänger resultierenden Effekte kompensieren.

## Kurzbeschreibung der Erfindung

Zur Lösung der genannten Aufgabe stellt die vorliegende Erfindung ein Verfahren gemäß Anspruch 1 zum Einstellen von Ausgangsspannungen eines Trübungssensors und einen entsprechend aufgebauten Trübungssensor gemäß Anspruch 5 bereit.

Bei dem erfindungsgemäßen Verfahren zum Einstellen von Ausgangsspannungen eines Trübungssensors, der mittels zweier Strahlungen unterschiedlicher Wellenlängen die Trübung eines Mediums bestimmt, wird in Abhängigkeit davon, welche Wellenlänge der Empfänger des Trübungssensors erhält, dessen ausgangsseitige ohmsche Belastung so eingestellt, dass unabhängig davon, welche Wellenlänge die empfangene Strahlung hat, sich im Wesentlichen gleiche Ausgangsspannungen ergeben.

Bevorzugte Ausführungsformen sind in den abhängigen Ansprüchen definiert.

## Kurzbeschreibung der Figuren

In der folgenden Beschreibung bevorzugter Ausführungsformen wird auf die beigefügten Figuren Bezug genommen, von denen zeigen:

Fig. 1     eine schematische Darstellung eines Trübungssensors mit einem Sender und einem Empfänger,

Fig. 2     eine schematische Darstellung des Einflusses von Belastungswiderständen für den Empfänger auf Ausgangsspannungen des Trübungssensors von Fig. 1 in Abhängigkeit von Senderströmen für den Sender von Fig. 1,

Fig. 3     Kennlinien für den Trübungssensor von Fig. 1 gemäß einer ersten ausgangsseitigen ohmschen Belastung,

Fig. 4     Kennlinien für den Trübungssensor von Fig. 1 gemäß einer zweiten ausgangsseitigen ohmschen Belastung,

Fig. 5     Kennlinien für den Trübungssensor von Fig. 1 mit angepaßten ausgangsseitigen ohmschen Belastungen, und

Fig. 6     eine schematische Darstellung eines erfindungsgemäßen Trübungssensors mit zwei Sendern und einem Empfänger.

## Beschreibung bevorzugter Ausführungsformen

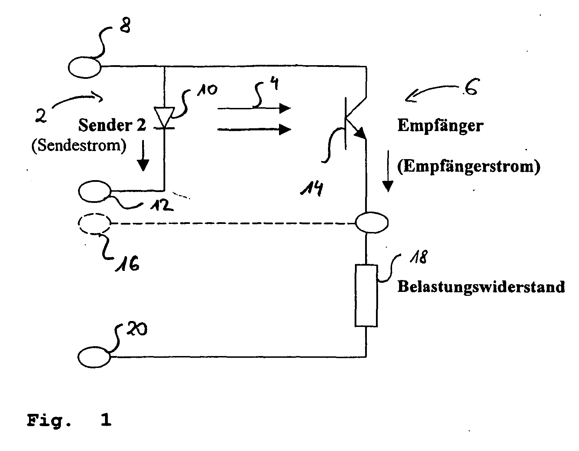

Zum besseren Verständnis der vorliegenden Erfindung wird zunächst auf die Fig. 1 bis 5 Bezug genommen, die die Erfindung der zugrunde liegenden Stammanmeldung betreffen.

Wie in Fig. 1 schematisch dargestellt, umfasst ein Trübungssensor (nicht bezeichnet) einen Sender 2, der einen optischen Strahl 4 aussendet. Der optische Strahl 4 wird von einem Empfänger 6 empfangen, der in Abhängigkeit von der erhaltenen Bestrahlungsintensität einen Empfängerstrom erzeugt. Im Verhältnis der von dem Sender 2 ausgegebenen Strahlungsintensität zu der von dem Empfänger 6 empfangenen Strahlungsintensität werden Wechselwirkungen des Strahls 4 auf seinem Ausbreitungsweg von dem Sender 2 zu dem Empfänger 6, beispielsweise durch ein Reinigungs- oder Trocknungsmediums eines Haushaltsgeräts, ermittelt, um die Trübung oder Verunreinigung des Mediums zu bestimmen.

Der Sender 2 umfasst eine mit einem Potential 8 verbundene Senderdiode 10, die ausgangsseitig mit einem Senderpotential 12 verbunden ist. Die Potentialdifferenz zwischen dem Potential 8 und dem Senderpotential 12 sowie die Eigenschaften der Senderdiode 10 bestimmen den Senderstrom und damit die von der Senderdiode 10 erzeugte Strahlung 4. Der Empfänger 6 weist einen Empfängertransistor 14 auf, der ebenfalls mit dem Potential 8 verbunden ist. Soweit entspricht die Schaltungsanordnung herkömmlichen Schaltungsanordnungen von Sendern und Empfängern von Trübungssensoren.

Herkömmlicherweise ist der Empfängertransistor 14 ausgangsseitig mit einem Empfängerpotential 16 verbunden, das, wie das Senderpotential 12, durch eine Steuerelektronik (nicht dargestellt) definiert ist. D.h., die Senderdiode 10 und der Empfängertransistor 14 sind jeweils mit entsprechenden Anschlüssen einer Steuerelektronik verbunden. Diese Anordnung ist in Fig. 1 durch die gestrichelten Linien angedeutet.

Dem gegenüber wird bei der vorliegenden Erfindung der Empfänger 6, genauer dessen Empfängertransistor 14, ausgangsseitig mit einem, vorteilhafterweise baueinheitlich integrierten, Belastungswiderstand 18 verbunden, der wiederum mit einem Empfängerpotential 20 verbunden ist.

Üblicherweise ist das Potential 8 mit einer positiven Versorgungsspannung verbunden, wohingegen das Senderpotential 12 und das Empfängerpotential 16 mit der Steuerung und das Potential 20 jeweils mit einem Bezugspotential von 0 Volt verbunden sind. Die Potentiale 12 und 16 sind Eingänge bzw. Ansteuerleitungen und das Potential 20 dient für eine zum Betrieb des Trübungssensors verwendete Steuerung als Bezugspotential, wobei ein Versorgungspotential der Steuerung als Masse für den Trübungssensor verwendet wird.

Die von der Senderdiode 10 erzeugte Strahlungsleistung ist direkt proportional zu dem durch die Senderdiode 10 fließenden Senderstrom, so lange die Senderdiode 10 im linearen Bereich betrieben wird. Dieses proportionale Verhältnis ist nicht gegeben, wenn die Senderdiode 10 außerhalb ihres linearen Bereichs betrieben wird, d.h. der Senderstrom klein ist. Dem entsprechend ist zum Betrieb der Senderdiode 10 ein Senderstrom zu verwenden, der einen Betrieb der Senderdiode 10 in ihrem linearen Bereich gewährleistet.

Dies gilt in vergleichbarer Weise für den von dem Empfängertransistor 14 erzeugten Empfängerstrom. Deshalb sollte die von dem Empfänger 6 erhaltene Strahlungsintensität des Strahls 4 so groß sein, dass der Empfängertransistor 14 in seinem linearen Bereich betrieben wird, um eine Proportionalität zwischen der empfangenen Strahlungsintensität und dem erzeugten Empfängerstrom zu erreichen.

Da die relativen Transmissionsverluste des Strahls 4 auf seinem Ausbreitungsweg von dem Sender 2 zu dem Empfänger 6 über das Gehäuse (nicht dargestellt) des Trübungssensors unabhängig von der übertragenen Strahlungsleistung sind, gilt für das Verhältnis des Empfängerstroms zu dem Senderstrom folgende Gleichung:

$$I_e = K \times I_s,$$

wobei $I_e$ den Empfängerstrom, K die eingangs genannte Übertragungskonstante und $I_s$ den Senderstrom bezeichnen.

Dem entsprechend gilt für eine im Wesentlichen über dem Belastungswiderstand 18 abfallende, empfängerseitige Ausgangsspannung zwischen dem Potential 20 und dem Empfängerpotential 16 folgendes:

$$U_e = I_e \times R = R \times K \times I_s,$$

wobei $U_e$ die ausgangsseitige Empfängerspannung und R die Größe des Belastungswiderstandes 18 angeben.

Damit kann das Verhältnis der Empfängerspannung $U_e$ zu dem Senderstrom $I_s$ wie folgt definiert werden:

$$U_e \div I_s = K \times R.$$

Um unabhängig von der im Wesentlichen durch den Sender 2 und dem Empfänger 6 bestimmten Übertragungscharakteristik ein gewünschtes Verhältnis der Empfängerspannung $U_e$ und des Senderstroms $I_s$ zu erhalten, wird in Abhängigkeit von der tatsächlichen Übertragungscharakteristik die Größe R des Belastungswiderstandes 18 variiert. So können höhere Übertragungskonstanten K durch niedrigerere Belastungswiderstände R kompensiert werden und umgekehrt.

Werden beispielsweise ein Sender mit schlechtem Wirkungsgrad und ein unempfindlicher Empfänger verwendet, so ergibt sich für einen vorgegebenen Senderstrom ein relativ dazu kleiner Ausgangsstrom. Im Gegensatz dazu wird bei gleichem Senderstrom ein relativ dazu hoher Ausgangsstrom erzeugt, wenn ein Sender mit hohem Wirkungsgrad und ein empfindlicher Empfänger eingesetzt werden. Um für diese Sender- und Empfängerpaarungen im Wesentlichen gleiche Übertragungscharakteristika zu erreichen, wird im ersten Fall ein hochohmiger Belastungswiderstand 18 oder gar kein Belastungswiderstand 18 verwendet, wohingegen im zweiten Fall ein niederohmiger Belastungswiderstand 18 verwendet wird. Auf diese Weise werden trotz unterschiedlicher Sender und Empfänger, genauer nicht optimal aufeinander abgestimmter Sender und Empfänger, für alle Sender- und Empfängerpaarungen im Wesentlichen gleiche Ausgangsspannungen erzeugt.

Der Belastungswiderstand 18 wird in Abhängigkeit von der Breite und/oder der Lage des Toleranzbereichs eingestellt, der sich durch die jeweilige Kombination der optischen Einzelelemente, d.h. insbesondere des Senders 2 und des Empfängers 6 sowie des Gehäuses ergibt. Der im Sensorgehäuse selbst und insbesondere bei dem Empfänger 6, beispielsweise auf einer Platine, angeordnete Belastungswiderstand 18 kann auf verschiedene Arten eingestellt werden. Außerdem ist es vorgesehen, einzelne oder mehrere Abgleichwiderstände einzusetzen, beispielsweise zu verlöten, um einen schon vorhandenen Belastungswiderstand (z.B. Widerstände von angeschlossenen Komponenten, Leitungen, etc.) anzupassen. Ferner können lasergetrimmte Widerstände verwendet und/oder als Potentiometer ausgeführte Widerstände verwendet werden. Der Einsatz von beispielsweise als digitale Potentiometer ausgeführten Widerständen ist insbesondere bei Anwendungen eines Trübungs- oder Verunreinigungssensors vorteilhaft, mit denen sehr genaue Messungen durchgeführt werden sollen und somit sehr genaue Übertragungsfunktionen erforderlich sind. Des weiteren kann die Anpassung des Belastungswiderstandes 18 durch Zerstören von bestückten Bauteilen (schon mit dem Empfänger 6 verbundene Widerstände) oder Auftrennen von Leiterbahnen und/oder Freibrennen bzw. -schalten von Widerständen erfolgen.

Bei den derzeit verfügbaren, üblicherweise in Selektionsgruppen bezogenen, Komponenten für Trübungssensoren ergeben sich Toleranzbereiche mit einer Schwankungsbreite von etwa +/-60%. Somit können sich für nicht angepaßte Sender- und Empfängerpaarungen für eine gewünschte Ausgangsspannung von 1 Volt tatsächliche Ausgangsspannungen mit Werten zwischen 0,4 und 1,6 Volt ergeben. Mit der im Folgenden erläuterten Anpassung bzw. Einstellung des Belastungswiderstandes 18 können diese Schwankungen je nach Genauigkeit der Durchführung des Anpassungsvorgangs beispielsweise um den Faktor 10 verringert werden.

Im Folgenden wird die Anpassung des Belastungswiderstandes 18 der Einfachheit halber hinsichtlich des Senders 2 und des Empfängers 6 beschrieben. Diese Anpassung ist aber auch hinsichtlich einzelner oder mehrerer weiterer Komponenten eines Trübungssensors anwendbar.

Bei Verwendung von Sendern und Empfängern, deren die Übertragungseigenschaft für den Strahl 4 bestimmenden technischen Größen nicht bekannt sind, werden der Sender 2 und der Empfänger 6 vermessen, um einen Widerstand R für den Belastungswiderstand 18 zu bestimmen, der für die gewünschte Ausgangsspannung $U_e$ sorgt.

Aufgrund verbesserter Herstellungsverfahren werden die bei Trübungssensoren verwendbaren Sender und Empfänger immer hochwertiger, d.h. die Absolutwerte der optischen Kenngrößen liegen immer höher. Erschwerend kommt hinzu, dass die höherwertigen Komponenten aber weiterhin nährungsweise die prozentuale Streubreite aufweisen wie vorherige, schlechtere Komponenten. Dem entsprechend liefern die höherwertigen Komponenten höhere Absolutwerte, weisen in ihren Toleranzbereichen aber mit schlechteren Komponenten vergleichbare prozentuale Schwankungen auf. Wie oben ausgeführt, kann dies dazu führen, dass der Empfänger 6 einen hohen Ausgangsstrom $I_e$ liefert. Um zu vermeiden, dass die Ausgangsspannung $U_e$ einen gewünschten Wert überschreitet, werden in diesen Fällen im Allgemeinen kleine Widerstände R für den Belastungswiderstand 18 verwendet. Bei derartig genau gefertigten Sendern und Empfängern, d.h. Sendern mit besonders hohem Wirkungsgrad und besonders empfindlichen Empfängern, dient der Belastungswiderstand 18 zum Einen dazu, den Sender 2 und den Empfänger 6 aufeinander anzupassen, und zum Andern dazu, die besseren technischen Eigenschaften dieser Komponenten "zu kompensieren". Auf diese Weise wird durch eine in Abhängigkeit des Senders 2 und des Empfängers 6 durchgeführte Anpassung des Belastungswiderstandes 18 eine gewünschte Übertragungscharakteristik erreicht.

Ein weiterer Vorteil des Belastungswiderstandes 18 besteht darin, dass Übertragungscharakteristika erreicht werden können, die mit verfügbaren Sender- und Empfängerpaarungen sonst nicht erreichbar wären. Dies gilt beispielsweise für den Fall, dass die Empfangscharakteristik eines zur Verwendung bei einem Trübungssensor vorgesehenen Empfängers die Verwendung eines gewünschten Senders verhindert. Durch eine entsprechende Wahl der Größe des Belastungswiderstandes 18 kann der vorgesehene Empfänger und der gewünschte Sender in einem Trübungssensor verwendet werden, obwohl diese eigentlich nicht "zueinander passen".

Des weiteren ermöglicht es der Belastungswiderstand 18, nicht verfügbare Leistungs- bzw. Empfindlichkeits-Selektionsgruppen von Sender- und Empfängerpaarungen zu realisieren, indem der Belastungswiderstand 18 entsprechend eingestellt wird.

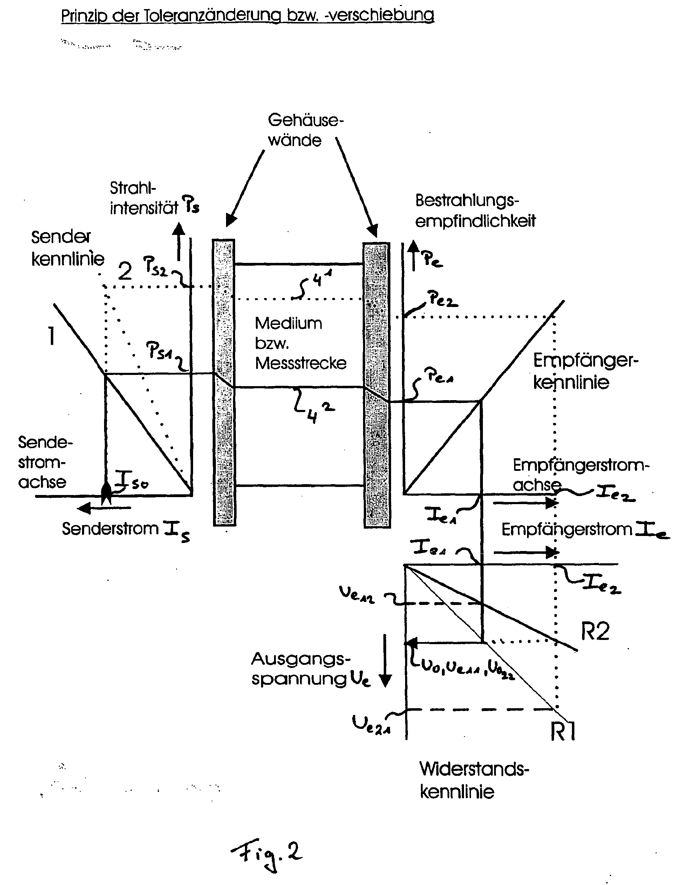

Fig. 2 veranschaulicht den Einfluß des Belastungswiderstandes 18 auf den Toleranzbereich eines Trübungssensor, wobei im Folgenden der Einfluß des Belastungswiderstandes 18 auch als Toleranzänderung bzw. -verschiebung bezeichnet wird. In Fig. 2 ist links die Strahlintensität $P_s$ des Senders 2 in Abhängigkeit des Senderstroms $I_s$ dargestellt, wobei Senderkennlinien 1 und 2 Sender unterschiedlicher Güte angeben (Senderkennlinie 1: schlechter Sender; Senderkennlinie 2: guter Sender).

Ferner ist in Fig. 2 rechts der Empfängerstrom $I_e$ des Empfängers 6 in Abhängigkeit der empfangenen Strahlintensität (Bestrahlungsintensität) $P_e$ für einen Empfänger einer Güte gezeigt.

Außerdem sind Gehäusewände 22 und 24 des Trübungssensorgehäuses und ein Bereich eines zu vermessenden Mediums 26 veranschaulicht, durch den sich die Strahlung 4 ausbreitet.

Für einen vorgegebenen Senderstrom $I_{s0}$ ergibt sich für den schlechten Sender mit der Senderkennlinie 1 eine Strahlintensität von $P_{s1}$, während sich für den guten Sender mit der Senderkennlinie 2 eine Strahlintensität von $P_{s2}$ ergibt. Daraus ergeben sich Strahlungen $4^1$ und $4^2$, wobei der parallele Verlauf dieser Strahlungen angibt, dass sie den gleichen Wechselwirkungen auf ihren Ausbreitungswegen von dem Sender 2 zu dem Empfänger 6 unterworfen sind.

Der Empfänger 6 erhält Strahlungen mit einer Bestrahlungsempfindlichkeit $P_{e1}$ für den schlechten Sender und eine Bestrahlungsempfindlichkeit $P_{e2}$ für den guten Sender. Aufgrund der Empfängerkennlinie ergibt sich ein Empfängerstrom $I_{e1}$ in Antwort auf die von dem schlechten Sender empfangene Strahlung, während aus der von dem guten Sender herrührenden Strahlung ein Empfängerstrom $I_{e2}$ resultiert.

Die sich in Abhängigkeit des Empfängerstroms $I_e$ ergebende Ausgangsspannung $U_e$ ist in Fig. 2 rechts unten für einen Belastungswiderstand 18 mit dem Widerstandswert R2 und einen Belastungswiderstand 18 mit dem hochohmigeren Widerstandswert R1 dargestellt. Für den Widerstandswert R2 ergibt sich für den Empfängerstrom $I_{e1}$ eine Ausgangsspannung $U_{e12}$, während der Empfängerstrom $I_{e2}$ eine Ausgangsspannung $U_{e22}$ bewirkt. Für den Widerstandswert R1 ergeben sich für die Empfängerströme $I_{e1}$ und $I_{e2}$ Ausgangsspannun-

gen $U_{e11}$ bzw. $U_{e21}$.

Um unabhängig von der Qualität des Senders eine gleiche Ausgangsspannung $U_e$ zu erhalten, wird dem entsprechend für den schlechten Sender (Senderkennlinie 1) bzw. den daraus resultierenden Empfängerstrom $I_{e1}$ der Widerstandswert R1 für den Belastungswiderstand 18 gewählt. Im Fall des guten Senders (Senderkennlinie 2) bzw. des Empfängerstroms $I_{e2}$ wird der Widerstandswert R2 für den Belastungswiderstand 18 eingestellt, um in beiden Fällen die gleichen Ausgangsspannungen zu erreichen, nämlich $U_{e11}$ und $U_{e22}$.

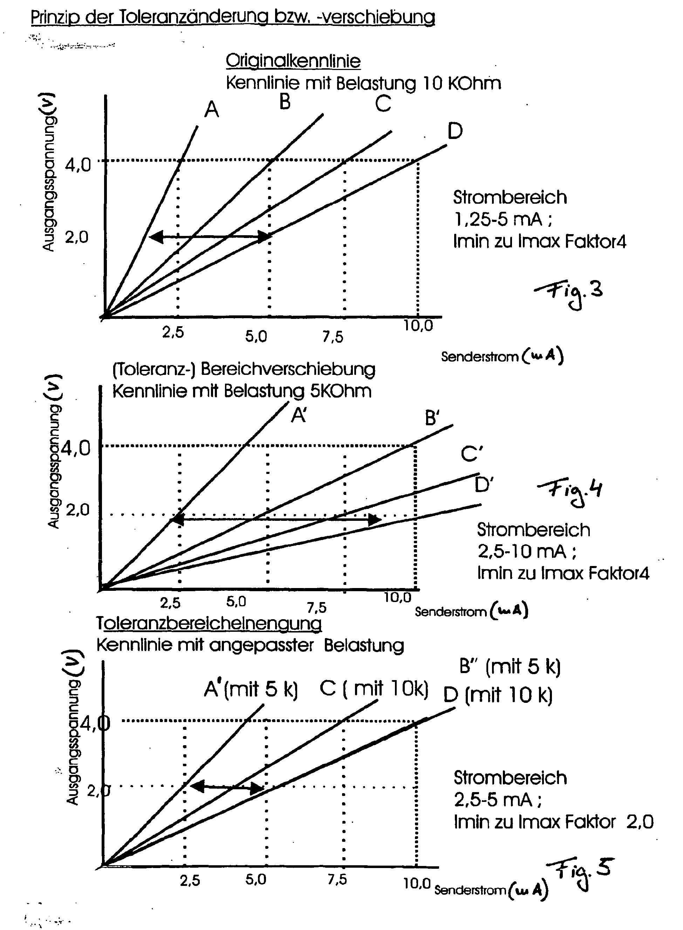

Unter Bezugnahme auf Fig. 3, 4 und 5 wird anhand weiterer Kennlinien für Trübungssensoren die Toleranzänderung bzw. -verschiebung mittels des Belastungswiderstandes 18 veranschaulicht.

In Fig. 3 sind für vier Kennlinien, A, B, C und D die Ausgangsspannung $U_e$ in Abhängigkeit des Senderstroms $I_s$ dargestellt. Hierbei stellt die Kennlinie A eine gute Sender-Empfänger-Paarung dar, während die Kennlinien B, C und D zunehmend schlechtere Sender-Empfänger-Paarungen zeigen. Hierbei wird angenommen, dass der Belastungswiderstand 18 einen Wert von 10 kOhm hat.

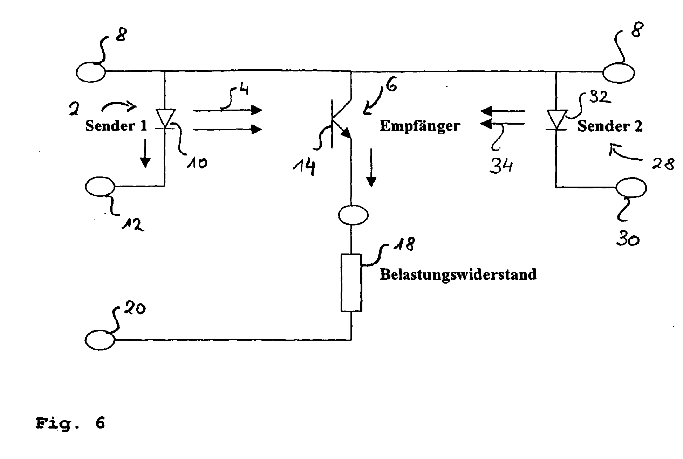

Demgegenüber zeigt Fig. 4 eine Toleranzänderung bzw. -verschiebung bei Verwendung eines Belastungswiderstandes 18 mit einem Wert von 5 kOhm, wobei hier ein Kennlinie A' eine gute und die Kennlinien B', C' und D' zunehmend schlechtere Sender-Empfänger-Paarungen angeben.

Ausgehend von den in Fig. 3 und 4 dargestellten Verhältnissen zwischen Senderströmen Is und Ausgangsspannungen Ue kann für die Sender-Empfänger-Paarungen, die in Abhängigkeit des Belastungswiderstandes 18 die Kennlinien B/B' und D/D' aufweisen, im Wesentlichen gleiche Kennlinien erreicht werden, wenn für die gute Sender-Empfänger-Paarung (Kennlinie B/B') der Belastungswiderstand 18 einen Wert von 5 kOhm und für die schlechtere Sender-Empfänger-Paarung (Kennlinie D/D') einen Wert von 10 kOhm hat.

Des Weiteren kann durch eine geeignete Wahl von Belastungswiderständen 18 eine Einengung des Bereichs der Ausgangsspannungen des Empfängers 6 erreicht werden, in dem Kennlinien für Sender-Empfänger-Paarungen verschoben werden. So kann beispielsweise der Bereich, in dem die Ausgangsspannung des Empfängers 6 liegt, für die Sender-Empfänger-Paarungen mit den Kennlinien A/A' und C/C' begrenzt werden, wenn für die Sender-Empfänger-Paarung mit den Kennlinien A/A' der Belastungswiderstand 18 einen Wert von 5 kOhm hat und für die Sender-Empfänger-Paarung mit den Kennlinien C/C' ein Belastungswiderstand 18 mit einem Wert von 10 kOhm gewählt wird.

Des weiteren wird durch die Verwendung angepasster Widerstandswerte für den Belastungswiderstand 18, wie in Fig. 3 bis 5 durch die Pfeile angedeutet, für den Senderstrom der Bereich verkleinert, über den der Senderstrom für unterschiedliche Sender-Empfänger-Paarungen variiert wird, um eine Ausgangsspannung mit einem vorgegebenen Wert zu erreichen (beispielsweise 2 Volt).

Eine weitere Anwendung der oben beschriebenen Anpassung von Belastungswiderständen bzw. entsprechend aufgebauten Trübungssensoren sind Trübungssensoren mit zwei Sendern, die Strahlungen unterschiedlicher Wellenlängen aussenden, und einem Empfänger, der zum Empfang beider Strahlungen vorgesehen ist. Wie in Fig. 6 dargestellt, umfasst ein solcher Trübungssensor neben den in Fig. 1 dargestellten Komponenten einen weiteren Sender 28 mit einer zwischen dem Potential 8 und einem zweiten Senderpotential 30 angeschlossenen Senderdiode 32. Die Senderdiode 32 sendet eine Strahlung 34 aus, deren Wellenlänge sich von der der Strahlung 4 unterscheidet. Die Verwendung von Strahlungen unterschiedlicher Wellenlänge kann verwendet werden, um eine Trübung oder Verunreinigung eines Mediums aufgrund unterschiedlicher Ursachen (z.B. Stoffpartikel, Schmutzstoffe, Gasblasen, etc.) zu unterscheiden.

Beim Betrieb eines solchen Trübungssensors werden der Sender 2 und der Sender 24 abwechselnd aktiviert, so dass der Empfänger 6 die Strahlungen 4 und 34 alternierend erhält.

Da die spektrale Empfindlichkeit des Empfängers 6 für den Empfang einer Strahlung einer bestimmten Wellenlänge vorgegeben ist, ergeben sich beim Empfang von Strahlungen, die in etwa die gleiche Intensität aufweisen, aber unterschiedliche Wellenlängen haben, unterschiedliche Ausgangsspannungen $U_e$. Werden beispielsweise für den Empfänger 6 Siliciumbasierte Komponenten mit einer für Wellenlängen im Bereich von 900 nm ausgelegten spektralen Empfindlichkeit, ein Sender 2 zur Abgabe von Infrarotstrahlung mit einer Wellenlänge von etwa 880 nm und ein Sender 28 zur Abgabe einer Strahlung mit einer Wellenlänge von etwa 560 nm (grünes Licht) verwendet, halbiert sich die Empfindlichkeit des Empfängers 6 in etwa für Wellenlängen von etwa 560 nm verglichen mit Wellenlängen von etwa 880 nm. Dem entsprechend ergibt sich beim Empfang von Infrarotstrahlung eine etwa doppelt so große Ausgangsspannung $U_e$ verglichen mit einem Empfang von Strahlung mit einer Wellenlänge von etwa 560 nm, wenn beide Strahlungen in etwa die gleiche Intensität aufweisen.

Um in solchen Fällen in etwa gleiche Ausgangsspannungen $U_e$ unabhängig von der Wellenlänge der von dem Empfänger empfangenen Strahlung 4 bzw. 34 zu erreichen, wird der Belastungswiderstand 18 in Abhängigkeit der Wellenlänge der empfangenen Strahlung variiert.

Hierbei ist vorgesehen, für den Belastungswiderstand 18 einen ersten Widerstandswert zur Anpassung an den Sender 2 und einen zweiten Widerstandswert zur Anpassung an den Sender 28 zu ermitteln. Beim Betrieb des in Fig. 6 schematisch dargestellten Trübungssensors wird der Belastungswiderstand 18 beim Aussenden bzw. Empfangen der Strahlung 4 auf den ersten Widerstandswert und beim Senden bzw. Empfangen der Strahlung 34 auf den zweiten Widerstandswert eingestellt. Auf diese Weise werden unabhängig von der Wellenlänge der empfangenen Strahlung in etwa gleich große Ausgangsspannungen $U_e$ erzeugt.

Ferner ist es vorgesehen, die ersten und zweiten Widerstandswerte für den Belastungswiderstand 18 so zu wählen, dass auch Unterschiede in der Strahlungsintensität der Strahlungen 4 und 34 so kompensiert werden, dass sich in allen Fällen in etwa gleich große Ausgangsspannungen $U_e$ ergeben.

Zur Umschaltung des Belastungswiderstandes 18 zwischen den ersten und zweiten Widerstandswerten ist eine, z.B. in den Trübungssensor integrierte, elektronische Schaltung vorgesehen, wobei Steuersignale für die Sender 2 und 28 als Steuersignale zur Umschaltung des Belastungswiderstandes 18 verwendet werden können.

**Patentansprüche**

1. Verfahren zum Einstellen von Ausgangsspannungen eines Trübungssensors für Haushaltsgeräte zur Erfassung der Trübung eines Mediums (26) mittels einer von einem ersten Sender (2) ausgestrahlten und von einem Empfänger (6) empfangenen, sich wenigstens teilweise durch das Medium (26) ausbreitenden Strahlung (4) mit einer ersten Wellenlänge und mittels einer von einem zweiten Sender (28) ausgestrahlten und von dem Empfänger (6) empfangenen, sich wenigstens teilweise durch das Medium (26) ausbreitenden Strahlung (34) mit einer zweiten Wellenlänge, **gekennzeichnet durch** die folgenden Schritte:

   - Definieren einer ersten gewünschten Kennlinie oder eines ersten gewünschten Kennlinienbereichs, die die gewünschten Ausgangsspannungen ($U_e$) des Empfängers (6) in Antwort auf von dem ersten Sender (2) erhaltener Strahlung (4) mit der ersten Wellenlänge in Abhängigkeit von ersten Senderströmen ($I_s$) zum Betrieb des ersten Senders (2) charakterisiert,
   - Definieren einer zweiten gewünschten Kennlinie oder eines zweiten gewünschten Kennlinienbereichs, die die gewünschten Ausgangsspannungen ($U_e$) des Empfängers (6) in Antwort auf von dem zweiten Sender (32) erhaltener Strahlung (34) mit der zweiten Wellenlänge in Abhängigkeit von zweiten Senderströmen ($I_s$) zum Betrieb des zweiten Senders (32) charakterisiert,
   - Ermitteln einer ersten aktuellen Kennlinie, die die aktuelle Abhängigkeit von ersten Ausgangsspannungen ($U_e$) des Empfängers (6) von den ersten Senderströmen ($I_e$) charakterisiert,
   - Ermitteln einer zweiten aktuellen Kennlinie, die die aktuelle Abhängigkeit von zweiten Ausgangsspannungen ($U_e$) des Empfängers (6) von den zweiten Senderströmen ($I_e$) charakterisiert,
   - Vergleichen der ersten aktuellen Kennlinie mit der ersten gewünschten Kennlinie oder dem ersten gewünschten Kennlinienbereich,
   - Bestimmen einer ersten ausgangsseitigen ohmschen Belastung (18) für den Empfänger (6) derart, dass die gewünschten Ausgangsspannungen ($U_e$) in Abhängigkeit der ersten Senderströme ($I_s$) erreicht werden,
   - Vergleichen der zweiten aktuellen Kennlinie mit der zweiten gewünschten Kennlinie oder dem zweiten gewünschten Kennlinienbereich,
   - Bestimmen einer zweiten ausgangsseitigen ohmschen Belastung (18) für den Empfänger (6) derart, dass die gewünschten Ausgangsspannungen ($U_e$) in Abhängigkeit der zweiten Senderströme ($I_s$) erreicht werden, und
   - Ändern der ausgangsseitigen ohmschen Belastung (20) auf die erste ausgangsseitige ohmsche Belastung (18), wenn der Empfänger (6) die Strahlung (4) mit der ersten Wellenlänge empfängt, und auf die zweite ausgangsseitige ohmsche Belastung (20), wenn der Empfänger (6) die Strahlung (34) mit der zweiten Wellenlänge empfängt.

2. Verfahren nach Anspruch 1, bei dem zum Ändern der ausgangsseitigen ohmschen Belastung (18) ein in dem Trübungssensor baueinheitlich integrierter Widerstand (20) variiert wird.

3. Verfahren nach Anspruch 1 oder 2, bei dem zum Ändern der ausgangsseitigen ohmschen Belastung (18) digitale Potentiometer oder lasergetrimmte Widerstände verwendet werden.

4. Verfahren nach einem der vorherigen Ansprüche, bei dem zum Ändern der ausgangsseitigen ohmschen Belastung (18)

   - eine aktuelle Übertragungscharakteristik für die Strahlung (4) zwischen dem Sender (2) und dem Empfänger (6) ermittelt wird, und
   - auf der Grundlage der Übertragungscharakteristik ein Widerstandswert bestimmt wird, auf den die ausgangsseitige ohmsche Belastung (18) des Empfängers (6) geändert wird.

5. Trübungssensor für Haushaltsgeräte, insbesondere Waschmaschinen, Spülmaschinen und Trockengeräte, mit:

   - einem ersten Sender (2) zum Aussenden einer ersten Strahlung (4) mit einer ersten Wellenlänge,
   - einem zweiten Sender (32) zum Aussenden einer zweiten Strahlung (34) mit einer zweiten Wellenlänge,

- einem Empfänger (6) zum Empfangen der ersten Strahlung (4) und der zweiten Strahlung (34), **gekennzeichnet durch**

- einen mit dem Empfänger (6) ausgangsseitig verbundenen Belastungswiderstand (18) mit gemäß dem Verfahren nach Anspruch 1 eingestellten ersten und zweiten Widerstandswerten in Abhängigkeit von einem Empfang der ersten Strahlung (4) oder einem Empfang der zweiten Strahlung (34).

6. Trübungssensor nach Anspruch 5, bei dem der Belastungswiderstand (18) baueinheitlich integriert ist.

7. Trübungssensor nach Anspruch 5 oder 6, bei dem der Belastungswiderstand (18) ein Potentiometer ist.

8. Trübungssensor nach einem der Ansprüche 5 bis 7, mit einer Steuereinrichtung zum Einstellen der ersten und zweiten Widerstandswerte für den Belastungswiderstand (18) in Abhängigkeit vom Betrieb des ersten und des zweiten Senders (2, 32).

9. Trübungssensor nach Anspruch 8, bei dem die Steuereinrichtung in Abhängigkeit von Steuersignalen für den ersten Sender (2) und/oder den zweiten Sender (24) betrieben wird.

**Claims**

1. Method for adjusting output voltages of a turbidity sensor for household appliances for measuring the turbidity of a medium (26) by means of a radiation (4) which is emitted from a first sender (2) and received by a receiver (6), partially propagates through the medium (26) and has a first wavelength, and by means of a radiation (34) which is emitted by a second sender (28) and received by the receiver (6), at least partially propagates through the medium (26) and has a second wavelength, **characterized by** the following steps:

- defining a first desired characteristic line or a first desired characteristic line range which characterizes the desired output voltages ($U_e$) of the receiver (6) in response to radiation (4) received from the first sender (2) with the first wavelength in dependence on first sender currents ($I_s$) for operation of the first sender (2);
- defining a second desired characteristic line or a second desired characteristic line range which characterizes the desired output voltages ($U_e$) of the receiver (6) in response to a radiation (34) received from the second sender (32) with the second wavelength in dependence on second sender currents ($I_s$) for operation of the second sender (32);
- determining a first actual characteristic line which characterizes the actual dependency of first output voltages ($U_e$) of the receiver (6) from the first sender currents ($I_e$);
- determining a second actual characteristic line which characterizes the actual dependency of second output voltages ($U_e$) of the receiver (6) from the second sender currents ($I_e$);
- comparing the first actual characteristic line with the first desired characteristic line or the first desired characteristic line range;
- determining a first output side ohmic load (18) for the receiver (6) in such a manner that the desired output voltages ($U_e$) in dependence on the first sender currents ($I_s$) are reached;
- comparing the second actual characteristic line with the second desired characteristic line or the second desired characteristic line range;
- determining a second output side ohmic load (18) for the receiver (6) in such a manner that the desired output voltages ($U_e$) in dependence on the second sender currents ($I_s$) are reached, and
- changing the output side ohmic load (20) to the first output side ohmic load (18) when the receiver (6) receives the radiation (4) with the first wavelength and to the second output side ohmic load (20) when the receiver (6) receives the radiation (34) with the second wavelength.

2. Method according to claim 1, wherein for changing the output side ohmic load (18), a resistance (20) being integrated in the turbidity sensor is varied.

3. Method according to claim 1 or 2, wherein for changing the output side ohmic load (18), digital potentiometers or laser trimmed resistances are used.

4. Method according to one of the preceding claims, wherein for changing the output side ohmic load (18)

- a current transmission characteristic for the radiation (4) between the sender (2) and the receiver (6) is determined, and
- a resistance value to which the output side ohmic load (18) of the receiver (6) is changed is determined on the basis of the transmission characteristic.

5. Turbidity sensor for household appliances, in particular washing machines, dishwashers and dryers, comprising:

- a first sender (2) for emitting a first radiation (4) having a first wavelength,
- a second sender (32) for emitting a second radiation (34) having a second wavelength,
- a receiver (6) for receiving the first radiation (4) and the second radiation (34), **characterized by**
- a load resistance (18) being coupled to the receiver (6) on its output side having first and second resistance values adjusted according to the method defined in claim 1 in dependence on a receipt of the first radiation (4) or on a receipt of the second radiation (34).

6. Turbidity sensor according to claim 5, wherein the load resistance (18) is integrally formed.

7. Turbidity sensor according to claim 5 or 6, wherein the load resistance (18) is a potentiometer.

8. Turbidity sensor according to one of claims 5 to 7, comprising
a control means for adjusting the first and second resistance values for the load resistance (18) in dependence on the operation of the first and the second sender (2, 32).

9. Turbidity sensor according to claim 8, wherein the control means is operated in dependence on control signals for the first sender (2) and/or the second sender 24).

**Revendications**

1. Procédé pour régler les tensions de sortie d'un capteur de turbidité utilisé dans un appareil ménager pour détecter la turbidité d'un fluide (26) au moyen d'un rayonnement (4) avec une première longueur d'onde se propageant au moins en partie dans le fluide (26), émis par un premier émetteur (2) et reçu par un récepteur (6), et au moyen d'un rayonnement (34) avec une deuxième longueur d'onde se propageant au moins en partie dans le fluide (26), émis par un deuxième émetteur (28) et reçu par le récepteur (6), **caractérisé par** les étapes suivantes :

- la définition d'une première courbe caractéristique souhaitée ou d'une première plage de courbes caractéristiques souhaitée qui caractérise les tensions de sortie ($U_e$) souhaitées du récepteur (6) en réponse au rayonnement (4) avec la première longueur d'onde reçu par le premier émetteur (2) en fonction des premiers courants émetteurs ($I_s$) utilisés pour le fonctionnement du premier émetteur (2),

- la définition d'une deuxième courbe caractéristique souhaitée ou d'une deuxième plage de courbes caractéristiques souhaitée qui caractérise les tensions de sortie ($U_e$) souhaitées du récepteur (6) en réponse au rayonnement (34) avec la deuxième longueur d'onde reçu par le deuxième émetteur (32) en fonction des deuxièmes courants émetteurs ($I_s$) utilisés pour le fonctionnement du deuxième émetteur (2),

- la détermination d'une première courbe caractéristique actuelle qui caractérise la dépendance réelle des premières tensions de sortie ($U_e$) du récepteur (6) vis-à-vis des premiers courants émetteurs ($I_s$),

- la détermination d'une deuxième courbe caractéristique actuelle qui caractérise la dépendance réelle des deuxièmes tensions de sortie ($U_e$) du récepteur (6) vis-à-vis des deuxièmes courants émetteurs ($I_s$),

- la comparaison entre la première courbe caractéristique actuelle et la première courbe caractéristique souhaitée ou la première plage de courbes caractéristiques souhaitée,

- la définition d'une première charge ohmique (18) côté sortie pour le récepteur (6) de telle sorte que les tensions de sortie ($U_e$) souhaitées soient atteintes en fonction des premiers courants émetteurs ($I_s$),

- la comparaison entre la deuxième courbe caractéristique actuelle et la deuxième courbe caractéristique souhaitée ou la deuxième plage de courbes caractéristiques souhaitée,

- la définition d'une deuxième charge ohmique (18) côté sortie pour le récepteur (6) de telle sorte que les tensions de sortie ($U_e$) souhaitées soient atteintes en fonction des deuxièmes courants émetteurs ($I_s$),

- la modification de la charge ohmique (20) côté sortie en la remplaçant par la première charge ohmique (18) côté sortie lorsque le récepteur (6) reçoit le rayonnement (4) avec la première longueur d'onde, et en la remplaçant par la deuxième charge ohmique (20) côté sortie lorsque le récepteur (6) reçoit le rayonnement (34) avec la deuxième longueur d'onde.

2. Procédé selon la revendication 1, dans le cadre duquel
la modification de la charge ohmique (18) côté sortie est réalisée par variation d'une résistance (20) intégrée sous forme de composant dans le capteur de turbidité.

3. Procédé selon la revendication 1 ou 2, dans le cadre duquel
la modification de la charge ohmique (18) côté sortie est réalisée au moyen de potentiomètres numériques ou de résistances ajustées par laser.

4. Procédé selon l'une des revendications précédentes, dans le cadre duquel,
   pour modifier la charge ohmique (18) côté sortie, on procède

   - au calcul d'une caractéristique de transmission actuelle pour le rayonnement (4) entre l'émetteur (2) et le récepteur (6), et,
   - sur la base de ladite caractéristique de transmission, à la définition d'une valeur de résistance pour la nouvelle charge ohmique (18) côté sortie du récepteur (6).

5. Capteur de turbidité pour appareils ménagers, en particulier pour les machines à laver, les lave-vaisselle et les sèche-linge, comprenant :

   - un premier émetteur (2) pour l'émission d'un premier rayonnement (4) avec une première longueur d'onde
   - un deuxième émetteur (32) pour l'émission d'un deuxième rayonnement (34) avec une deuxième longueur d'onde
   - un récepteur (6) pour la réception du premier rayonnement (4) et du deuxième rayonnement (34), **caractérisé par**
   - une résistance de charge (18) reliée côté sortie au récepteur (6) et présentant les première et deuxième valeurs de résistance réglées conformément au procédé selon la revendication 1, en fonction de la réception du premier rayonnement (4) ou de la réception du deuxième rayonnement (34).

6. Capteur de turbidité selon la revendication 5, dans le cadre duquel
   la résistance de charge (18) est intégrée sous forme de composant.

7. Capteur de turbidité selon la revendication 5 ou 6, dans le cadre duquel
   la résistance de charge (18) est un potentiomètre.

8. Capteur de turbidité selon l'une des revendications 5 à 7, comprenant
   un dispositif de commande pour le réglage des première et deuxième valeurs de résistance pour la résistance de charge (18) en fonction du fonctionnement du premier et du deuxième émetteur (2, 32).

9. Capteur de turbidité selon la revendication 8, dans le cadre duquel
   le dispositif de commande fonctionne en fonction des signaux de commande générés pour le premier émetteur (2) et/ou pour le deuxième émetteur (24).

**Sender 2**
(Sendestrom)

**Empfänger**

(Empfängerstrom)

**Belastungswiderstand**

Fig. 1

Prinzip der Toleranzänderung bzw. -verschiebung

Fig. 2

## Prinzip der Toleranzänderung bzw. -verschiebung

Originalkennlinie
Kennlinie mit Belastung 10 KOhm

Strombereich
1,25-5 mA ;
Imin zu Imax Faktor 4

Fig. 3

Senderstrom (u A)

(Toleranz-) Bereichverschiebung
Kennlinie mit Belastung 5KOhm

Strombereich
2,5-10 mA ;
Imin zu Imax Faktor 4

Fig. 4

Senderstrom (u A)

Toleranzbereicheinengung
Kennlinie mit angepasster Belastung

Strombereich
2,5-5 mA ;
Imin zu Imax Faktor 2,0

Fig. 5

Senderstrom (u A)

**Fig. 6**